Europäisches Patentamt

(19) European Patent Office

Office européen des brevets

(11) Numéro de publication : **0 282 397 B1**

# FASCICULE DE BREVET EUROPEEN

(12)

(45) Date de publication du fascicule du brevet :
**15.01.92 Bulletin 92/03**

(51) Int. Cl.⁵ : **G02B 27/00**

(21) Numéro de dépôt : **88400475.5**

(22) Date de dépôt : **01.03.88**

(54) **Dispositif de visualisation collimatée en relief.**

(30) Priorité : **03.03.87 FR 8702834**

(43) Date de publication de la demande :
**14.09.88 Bulletin 88/37**

(45) Mention de la délivrance du brevet :
**15.01.92 Bulletin 92/03**

(84) Etats contractants désignés :
**DE GB IT SE**

(56) Documents cités :
**EP-A- 0 097 250**
**EP-A- 0 170 523**
**EP-A- 0 194 196**
**FR-A- 2 391 109**
**US-A- 3 860 955**
**PATENT ABSTRACTS OF JAPAN, vol. 8, no.**
**169 (P-292)[1606], 4 août 1984; & JP-A-59 64**
**813**

(73) Titulaire : **THOMSON-CSF**
**51, Esplanade du Général de Gaulle**
**F-92800 Puteaux (FR)**

(72) Inventeur : **Migozzi, Jean-Blaise**
**THOMSON-CSF SCPI 19, avenue de Messine**
**F-75008 Paris (FR)**
Inventeur : **Maureau, Claude**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

**Description**

La présente invention concerne un dispositif de visualisation collimatée en relief et peut s'appliquer en aéronautique à une visualisation tête basse ou tête haute.

Un dispositif de visualisation collimatée comporte, de manière connue, un générateur d'image lumineuse et une optique de collimation dans le plan focal de laquelle est située l'image lumineuse pour la projeter à l'infini. Les générateurs usuellement utilisés sont, soit des tubes à rayons cathodiques, soit des dispositifs imageurs à cristaux liquides. Dans le cas d'un tube cathodique, l'image peut être produite selon un balayage cavalier (balayage aléatoire) ou de télévision (balayage ligne par ligne) ; dans le cas de cristaux liquides l'image correspond à une répartition matricielle de points ou pixels en X et en Y.

Il est connu, par ailleurs, d'utiliser des micro-lentilles pour donner l'impression d'images avec des sujets en mouvement. Pour cela, on dispose un réseau de micro-lentilles au-dessus d'une pluralité d'images planes découpées en bandes et juxtaposées dans les plans focaux des micro-lentilles. L'observateur peut, en déplaçant selon un mouvement de rotation l'objet ainsi équipé devant ses yeux, voir successivement les différentes images qui reproduisent une scène avec des sujets en mouvement.

Le document EP-A-0.262.955 (Article 54(3) de la CBE) propose un dispositif permettant de générer au moins deux images entrelacées et comportant une matrice de micro-lentilles, chacune étant couplée à au moins deux pixels des images, le dispositif étant prévu pour donner une impression de relief.

Le but de l'invention est de produire une impression de relief de l'image collimatée en formant deux images monochromes destinées à être perçues respectivement par l'oeil droit et par l'oeil gauche.

Selon l'invention, il est réalisé un dispositif de visualisation collimatée en relief comportant, un générateur d'une première image lumineuse monochrome à visualiser et dont les points sont répartis selon une distribution matricielle en X et en Y de pixels, et une optique de collimation pour projeter à l'infini cette première image positionnée en son foyer, caractérisé en ce que le générateur produit simultanément au moins une deuxième image lumineuse de même teinte et entrelacée avec la première moyennant un décalage égal à la valeur d'un pixel selon l'une desdites directions X ou Y de la matrice, ledit générateur étant équipé d'une matrice de micro-lentilles, chaque micro-lentille étant couplée à un ensemble différent d'au moins deux pixels voisins selon ladite direction de décalage, et effectuant ainsi la visualisation d'un point image de mêmes coordonnées pour chaque image, lesdits pixels voisins étant situés dans le plan focal de la micro-lentille associée, et en ce que le dispositif comporte, en outre, une optique divergente placée entre la matrice de micro-lentilles et l'optique de collimation pour former un montage du type téléobjectif permettant d'assurer la séparation spatiale des images collimatées et l'observation séparée d'une première image avec l'oeil droit et d'une deuxième image avec l'oeil gauche dans une zone d'observation dite boîte à oeil de pupille déterminée et située à une distance déterminée par rapport à l'optique de collimation.

Les particularités de la présente invention apparaîtront dans la description qui suit donnée à titre d'exemple à l'aide des figures annexées qui représentent :
— Fig. 1, un schéma partiel du dispositif relatif à la structure du générateur d'image équipé de micro-lentilles ;
— Fig. 2, un schéma montrant les contraintes de positionnement pour l'observation d'image différente pour chaque oeil de l'observateur ;
— Fig. 3, un schéma d'un dispositif de visualisation collimatée en relief conforme à l'invention ;
— Fig. 4, un schéma du dispositif selon la figure 3 illustrant la marche des rayons et la formation des images collimatées ;
— Fig. 5, un schéma de détail relatif à l'utilisation de fibres à gradient d'indice dite à auto-focalisation ;
— Fig. 6, un schéma relatif à une application à un dispositif de visualisation tête haute de l'invention ;
— Fig. 7, un schéma du dispositif de visualisation considéré dans un cas où chaque point image est redistribué sous forme de trois pixels au niveau du générateur d'image lumineuse.

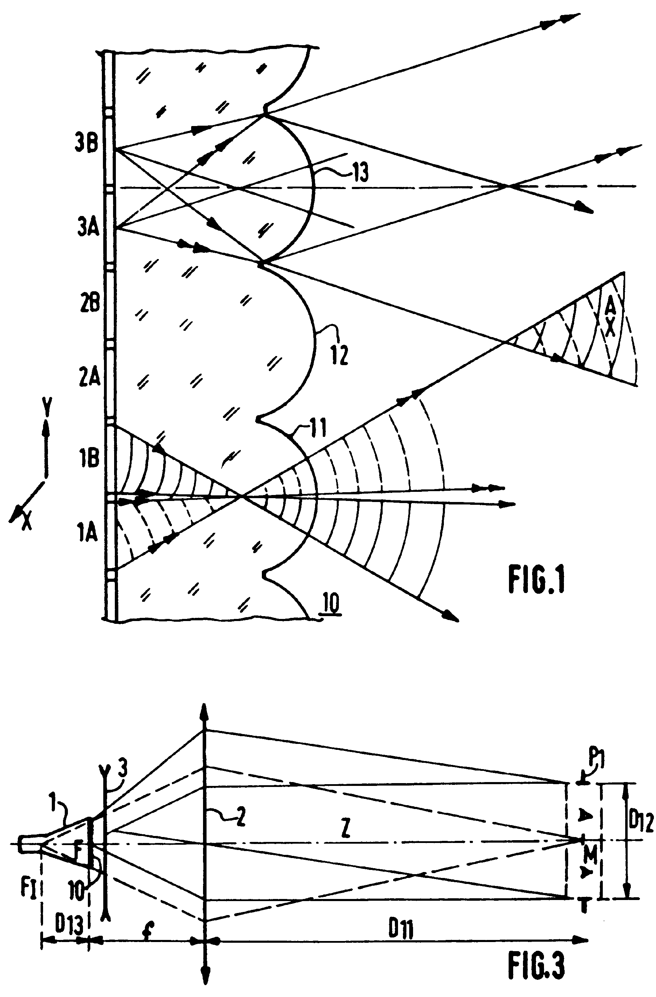

La figure 1 montre une répartition de micro-lentilles 11, 12, 13 etc..., chacune d'elles étant couplée avec une paire de pixels positionnés dans le plan focal correspondant. Par exemple, la micro-lentille 11 est couplée avec les deux pixels 1A, 1B selon la direction Y de colonne représentée. Une distribution identique est faite selon la direction ligne X pour les pixels successifs des autres colonnes de pixels. En considérant une distribution matricielle associée des micro-lentilles dont le nombre de colonnes est égal à celui des colonnes de pixels, on a ainsi associé à chaque fois deux pixels successifs d'une colonne à une micro-lentille. Le nombre de micro-lentilles N est égal à celui des points de chaque image. Les pixels 1A, 2A, 3A etc... forment une première image et les pixels 1B, 2B, 3B, etc... forment la deuxième image. La matrice de pixels comporte au total 2N pixels. Pour la micro-lentille 11 on a figuré les champs dans lesquels se trouve le rayonnement émis par les pixels 1A et 1B respectivement. Cette représentation est faite également pour certains rayons des pixels 3A et 3B. Chaque paire de pixels correspond à un point image de mêmes coordonnées dans la première et dans la deuxième image. On constate sur la figure 1 qu'un observateur placé trop près, par exemple en A, va recevoir des rayonnements provenant à la fois d'une première image par le point 1A et de la deuxième image par le point 3B ce qu'il faut éviter pour obtenir la perception du relief.

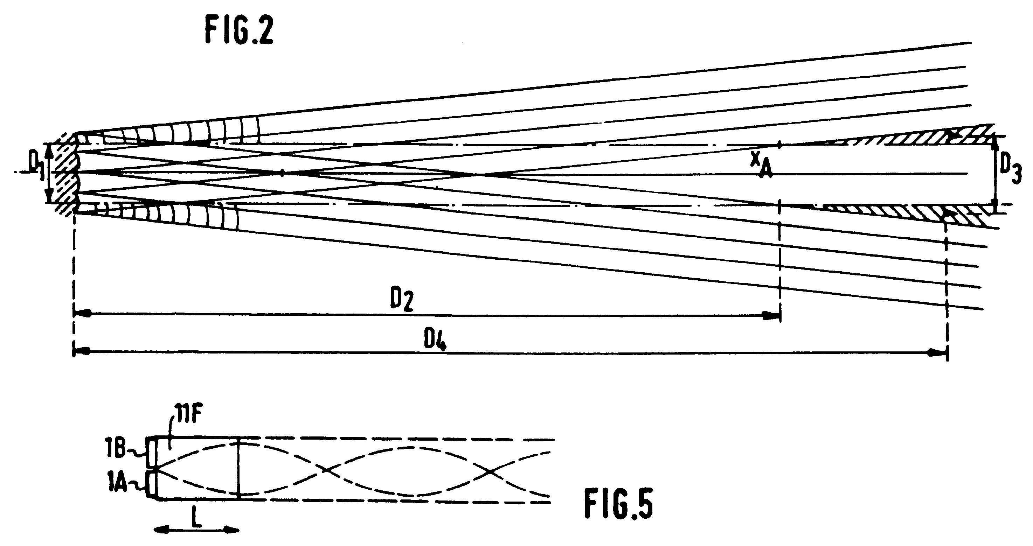

La figure 2 met en évidence l'éloignement progressif que doit présenter l'observateur par rapport au plan des micro-lentilles pour obtenir une vision séparée des images. La distance interpupillaire est représentée par D3 et elle est en pratique de l'ordre de 6,5 cm. Il a été considéré dans cet exemple un nombre relativement faible limité à quatre pour les micro-lentilles. D1 est la distance entre les axes optiques des micro-lentilles extrèmes. On voit que les yeux de l'observateur doivent se situer dans la zone hachurée, c'est-à-dire à une distance D4 de préférence supérieure à la distance minimale D2 indiquée. On se rend compte que, plus le nombre de micro-lentilles croît, plus la distance minimale d'éloignement D2 par rapport au plan des micro-lentilles devra être élevée. Le nombre de micro-lentilles est tel dans la pratique que l'on peut considérer la distance D2 très grande et correspondant pratiquement à un positionnement des yeux à l'infini pour satisfaire à la vision du relief.

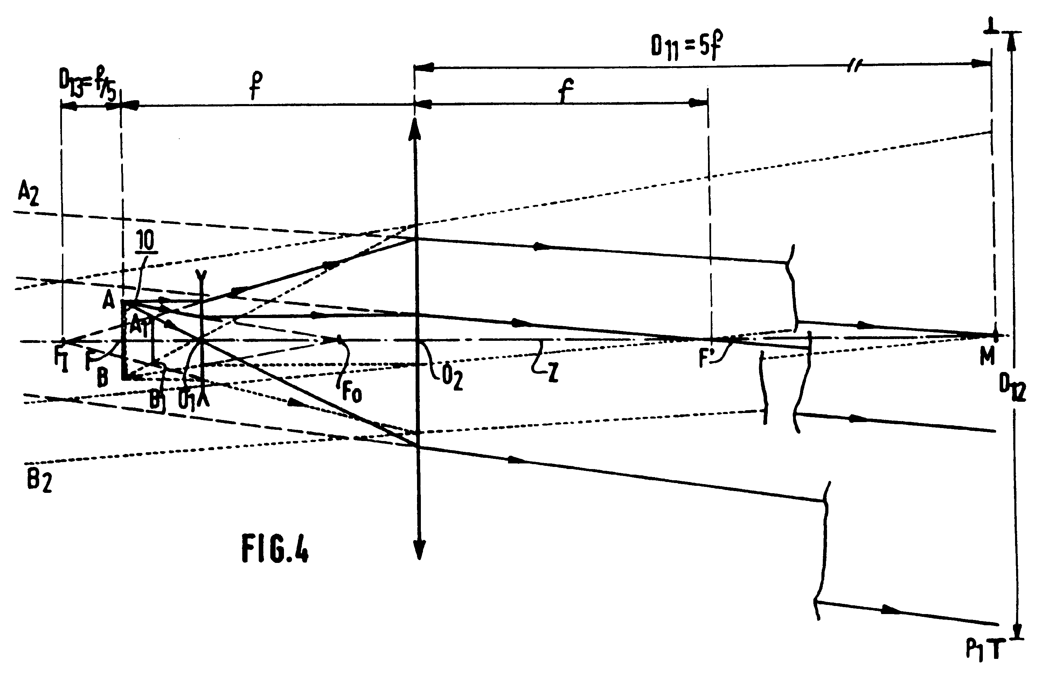

La figure 3, représente un dispositif de visualisation collimatée conforme à l'invention avec le générateur d'images lumineuses 1 constitué par un tube à rayons cathodiques dont l'écran est réalisé de la manière décrite à la figure 1 muni à l'avant du réseau de micro-lentilles 10. La lentille convergente 2 représente la formule optique de collimation qui projette à l'infini la représentation lumineuse formée par l'écran du tube cathodique 1 positionné dans le plan focal de cette lentille.

Pour que le but soit atteint et que chaque oeil ne voit que l'image qui lui est destinée, on interpose une lentille divergente 3 entre le plan des micro-lentilles 10 et la lentille convergente 2. Le montage est analogue à celui d'un téléobjectif. Les trajets lumineux sont détaillés sur la figure 4. La lentille divergente 3 forme de l'objet lumineux AB correspondant à l'écran équipé des micro-lentilles une image virtuelle A1, B1 qui est prise en compte comme un objet virtuel par la lentille convergente 2 qui en donne une image définitive A2, B2. Avec un positionnement judicieux des éléments 2 et 3 du plan 10, l'image A2, B2 est produite à une grande distance de la lentille collimatrice 2 et est vue par chacun des yeux comme si elle était pratiquement rejetée à l'infini. Cette condition est obtenue si le foyer image FI de la lentille divergente 3 est conjugué du point M situé sur l'axe optique et dans le plan de la boîte à oeil. La boîte à oeil est représentée par la pupille B1 et correspond à une zone située à une distance prédéterminée D11 de la lentille 2 et dont la largeur D12 correspond à environ deux fois la distance interpupillaire soit 13 cm environ. Grâce à l'optique divergente 3 la vision séparée des images pour chaque oeil est préservée de part et d'autre de l'axe central Z constituant l'axe optique de la formule optique 2 et 3 et sur lequel est centrée l'image AB en 10.

On peut considérer, à titre d'exemple, une distance de l'ordre de 50 cm pour D11, une focale f de 10 cm pour l'optique de collimation 2 et une distance D13 entre les foyers F et FI respectifs de l'ordre de 2 cm.

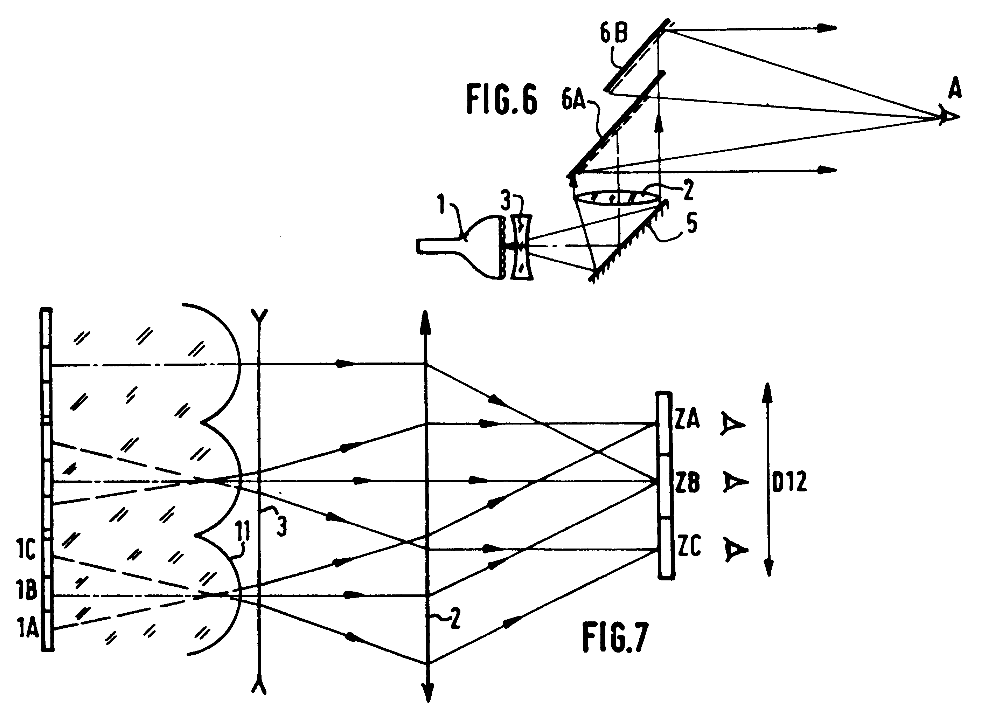

Parmi les variantes possibles, le réseau de micro-lentilles peut être remplacé par N éléments de fibre optique à gradient d'indice, l'indice variant radialement de manière à produire un trajet optique comportant des ventres et des noeuds comme indiqué schématiquement sur la figure 5. On prend un petit élément de longueur L de cette fibre autofocalisatrice dite également selfoc dont la puissance est par exemple de 10 dioptries par mètre. La longueur L correspond à une distance entre un ventre et un noeud. L'élément 11F indiqué permet de remplacer la micro-lentille 11 et il comporte également à une extrémité la paire de pixels 1A et 1B.

La figure 6 se rapporte à une application à une visualisation tête haute en avionique. L'image collimatée est réfléchie par une glace de combinaison ou un montage connu à deux glaces parallèles 6A, 6B représenté permettant d'accroître la pupille. Un miroir plan réfléchissant 5 permet de replier le schéma optique de manière habituelle. L'observateur en A regarde les images collimatées en relief et également la scène extérieure à travers les glaces 6A et 6B.

Parmi les autres variantes possibles on peut considérer celle illustrée par la figure 7 où les images sont en nombre égal à trois au lieu de deux. Dans ce cas, chaque micro-lentille, ou élément de fibre, est associé à un groupe de trois pixels, par exemple 1A, 1B, 1C pour la micro-lentille 11 de manière à former dans la boîte à oeil trois zones juxtaposées ZA, ZB, ZC. La vision de deux zones successives ZA et ZB, ou ZB et ZC, par les yeux permet de donner le relief. Cette solution permet d'accroître la largeur D12 de la boîte à oeil d'une unité interpupillaire soit 6,5 cm. Dans cette solution aussi bien que la précédente, les images lumineuses formées doivent être d'une même teinte soit monochrome soit d'une même couleur. En conséquence, le générateur d'images à tube cathodique ou à matrice de cristaux liquides est prévu pour fournir ces images monochromes. La version à cristaux liquides permet plus aisément d'incorporer les micro-lentilles 10.

## Revendications

1. Dispositif de visualisation collimatée en relief comportant, un générateur (1) d'une première image lumineuse monochrome à visualiser et dont les points sont répartis selon une distribution matricielle en X et en Y de pixels, et une optique de collimation (2) pour projeter à l'infini cette première image positionnée en son foyer, caractérisé en ce que le générateur (1) produit simultanément au moins une deuxième image lumineuse de même teinte et entrelacée avec la première moyennant un décalage égal à la valeur d'un pixel selon l'une des directions X et Y de la matrice, ledit générateur étant équipé d'une matrice de micro-lentilles (10), chaque micro-lentille (11, 12, 13,...) étant couplée à un ensemble différent d'au moins deux pixels (1A-1B, 2A-2B, 3A-3B,...) voisins selon ladite direction de décalage, et effectuant ainsi la visualisation d'un point image de mêmes coordonnées dans chaque image, lesdits pixels voisins étant situés dans le plan focal de la micro-lentille associée, et en ce que le dispositif comporte, en outre, une optique divergente (3) placée entre la matrice de micro-lentilles (10) et l'optique de collimation (2) pour former un montage de type téléobjectif permettant d'assurer la séparation spatiale des images collimatées et l'observation séparée d'une première image avec l'oeil droit et d'une deuxième image avec l'oeil gauche dans une zone d'observation dite boîte à oeil de pupille déterminée (P1, D12) et à une distance déterminée (D11) par rapport à l'optique de collimation.

2. Dispositif de visualisation selon la revendication 1, caractérisé en ce que chaque micro-lentille (11, 12, 13,...) est couplée à deux pixels (1A-1B, 2A-2B, 3A-3B,...) de la matrice pour former deux images lumineuses.

3. Dispositif de visualisation selon la revendication 1, caractérisé en ce que chaque micro-lentille (11) est couplée à trois pixels (1A, 1B, 1C) de la matrice pour former trois images lumineuses (ZA, ZB, ZC) et permettre l'observation en relief dans deux plages successives (ZA-ZB, ZB-ZC) et corrélativement dans une boîte à oeil agrandie.

4. Dispositif de visualisation selon l'une quelconque des revendications précédentes, caractérisé en ce que le réseau de micro-lentilles est formé en utilisant des éléments de fibres à gradient d'indice (11F).

5. Dispositif de visualisation selon l'une quelconque des revendications précédentes, caractérisé en ce que le générateur (1) est un tube à rayons cathodiques.

6. Dispositif de visualisation selon l'une quelconque des revendications précédentes, caractérisé en ce que le générateur (1) est une matrice à cristaux liquides.

7. Dispositif de visualisation selon l'une quelconque des revendications précédentes, utilisé en avionique pour réaliser un dispositif de visualisation collimatée tête basse ou tête haute.

**Patentansprüche**

1. Vorrichtung zur räumlichen, kollimierten Anzeige, mit einem Generator (1) eines ersten anzuzeigenden monochromen Leuchtbildes, dessen Punkte entsprechend einer matrixförmigen Verteilung von Bildelementen in X-Richtung und in Y-Richtung verteilt sind, und einer Rollimatoroptik (2), um dieses in ihrem Brennpunkt positionierte erste Bild ins Unendliche zu projizieren, dadurch gekennzeichnet, daß der Generator (1) gleichzeitig wenigstens ein zweites Leuchtbild mit gleichem Farbton erzeugt, das mit dem ersten mittels einer Verzögerung um den Wert eines Bildelementes entweder in der X-Richtung oder in der Y-Richtung der Matrix verschachtelt wird, wobei der Generator mit einer Matrix von Mikrolinsen (10) ausgerüstet ist, von denen jede (11, 12, 13,...) mit einer unterschiedlichen Gesamtheit von wenigstens zwei in der Verzögerungsrichtung benachbarten Bildpunkten (1A-1B, 2A-2B, 3A-3B,...) gekoppelt ist und so die Anzeige eines Bildpunktes mit den gleichen Koordinaten in jedem Bild bewirkt und wobei die benachbarten Bildelemente in der Brennebene der zugehörigen Mikrolinse angeordnet sind, und daß die Vorrichtung außerdem eine Divergenzoptik (3) umfaßt, die zwischen der Matrix der Mikrolinsen (10) und der Rollimatoroptik (2) angeordnet ist, um einen Aufbau vom Typ eines Teleobjektivs zu bilden, mit dem es möglich ist, die räumliche Trennung der kollimierten Bilder und die getrennte Beobachtung eines ersten Bildes mit dem rechten Auge und eines zweiten Bildes mit dem linken Auge in einer festgelegten Beobachtungszone (P1, D12), die Augenpupillenkasten genannt wird, und in einem bestimmten bestand (D11) bezüglich der Rollimatoroptik zu gewährleisten.

2. Anzeigevorrichtung gemäß Anspruch 1, dadurch gekennzeichnet, daß jede Mikrolinse (11, 12, 13,...) mit zwei Bildelementen (1A-1B, 2A-2B, 3A-3B,...) der Matrix gekoppelt ist, um zwei Leuchtbilder zu schaffen.

3. Anzeigevorrichtung gemäß Anspruch 1, dadurch gekennzeichnet, daß jede Mikrolinse (11) mit drei Bildelementen (1A, 1B, 1C) der Matrix gekoppelt ist, um drei Leuchtbilder (ZA, ZB, ZC) zu schaffen und die räumliche Beobachtung in zwei aufeinanderfolgenden Bereichen (ZA-ZB, ZB-ZC) und korrelativ in einem vergrößerten Augenkasten zu ermöglichen.

4. Anzeigevorrichtung gemäß einem der vorangehenden Ansprüche, dadurch gekennzeichnet, daß das Netz der Mikrolinsen unter Verwendung von Faserelementen mit Indexgradient (11F) gebildet wird.

5. Anzeigevorrichtung gemäß einem der vorangehenden Ansprüche, dadurch gekennzeichnet, daß der Generator (1) eine Rathodenstrahlröhre ist.

6. Anzeigevorrichtung gemäß einem der vorangehenden Ansprüche, dadurch gekennzeichnet, daß der Generator (1) eine Flüssigkristallmatrix ist.

7. Anzeigevorrichtung gemäß einem der vorangehenden Ansprüche, die in der Luft- und Raumfahrt-Elektronik verwendet wird, um eine tiefliegende oder eine hochliegende, kollimierte Anzeigevorrichtung zu verwirklichen.

**Claims**

1. A device for relief-collimated visualizing comprising a generator (1) for a first monochrome light image to be visualized and whose elements are distributed in accordance with a matrix system of X pixels and Y pixels, and a collimating optical system (2) in order to project at infinity this first image positioned at its focus, characterized in that the generator (1) produces simultaneously at least one second light image of the same shade and interlaced with the first one by means of an offset equal to the value of one pixel along one of the X and Y directions of the matrix system, the said generator having a matrix of micro-lenses (10), each micro-lens (11, 12, 13,...) being coupled with a different group of at least two adjacent pixels (1A-1B, 2A-2B and 3A-3B,...) along the said offset direction and thus permitting visualizing of an image element with the same coordinates in each image, the said adjacent pixels being situated in the focal plane of the associated micro-lens and in that the device furthermore comprises a diverging optical system (3) positioned between the micro-lens matrix (10) and the collimating optical system (2) in order to form a setup of the teleobjective type making it possible to spatially separate the collimated images and the separate observation of the first image with the right eye and of a second image with the left eye in a zone of observation constituting an eye box with a predetermined aperture (P1 and D12) and at a predetermined distance (D11) in relation to the collimating optical system.

2. The visualizing device as claimed in claim 1, characterized in that each micro-lens (11, 12, 13,...) is coupled with two pixels (1A-1B, 2A-2B and 3A-3B,...) of the matrix system in order to constitute two light images.

3. The visualizing device as claimed in claim 1, characterized in that each micro-lens (11) is coupled with three pixels (1A, 1B and 1C) of the matrix system in order to constitute three light images (ZA, ZB and ZC) and to permit relief observation in three successive sheets (ZA-ZB and ZB-ZC) and correlatively in an enlarged eye box.

4. The visualizing device as claimed in any one of the preceding claims, characterized in that the network of micro-lenses is formed using index gradient fibers (11F).

5. The visualizing device as claimed in any one of the preceding claims, characterized in that the generator (1) is a CRT.

6. The visualizing device as claimed in any one of the preceding claims, characterized in that the generator (1) is a matrix of liquid crystals.

7. The visualizing device as claimed in any one of the preceding claim, employed in avioncs in order to provide a low head or raised head collimated visualizing device.

FIG.1

FIG.3

FIG.2

FIG.5

FIG.4

$D_{11} = 5f$

$D_{13} = f/5$

$\rho$

$f$

$A_2$

10

$A$

$A_1$

$F_1$

$F$

$B$

$B_1$

$O_1$

$F_0$

$O_2$

$Z$

$F'$

$M$

$D_{12}$

$B_2$

$\infty$

$P_1T$

EP 0 282 397 B1

EP 0 282 397 B1

FIG.6

FIG.7

9